# EUROPÄISCHE PATENTSCHRIFT

(11) **EP 2 422 147 B1**
(45) Veröffentlichungstag und Bekanntmachung des Hinweises auf die Patenterteilung: **16.05.2018**
(21) Anmeldenummer: 10709540.8
(22) Anmeldetag: 19.03.2010
(51) Int. Cl.: F25D 23/00

(54) **HAUSHALTSSTANDGERÄT MIT ZUSÄTZLICHEM GERÄTEFUSS**
HOUSEHOLD APPLIANCE COMPRISING AN ADDITIONAL FOOT
APPAREIL MÉNAGER COMPORTANT UN PIED SUPPLÉMENTAIRE

(30) Priorität: 20.04.2009 DE 102009002500
(43) Veröffentlichungstag der Anmeldung: 29.02.2012
(73) Patentinhaber: BSH Hausgeräte GmbH, 81739 München (DE)
(72) Erfinder: LAIBLE, Karl-Friedrich, 89129 Langenau (DE); SPAAG, Rainer, 73479 Ellangen - Röhlingen (DE); KRAPP, Michael, 89564 Nattheim (DE)
(86) Internationale Anmeldenummer: PCT/EP2010/053627
(87) Internationale Veröffentlichungsnummer: WO 2010/121874

(56) Entgegenhaltungen:
- WO-A1-01/97664
- GB-A- 208 360
- GB-A- 819 057

## Beschreibung

Die vorliegende Erfindung betrifft ein Haushaltsstandgerät gemäß dem Oberbegriff des Anspruchs 1.

Bei Haushaltsstandgeräten, wozu üblicherweise auf dem Boden stehende möbelartige Geräte wie Kühlschränke, Gefrierschränke, Geschirrspülmaschinen, Waschmaschinen und Wäschetrockner zählen, sind üblicherweise an der Vorderseite zwei Gerätefüße vorgesehen, von denen oft mindestens einer höhenverstellbar ist. Außerdem sind an der Rückseite meist zwei Transportrollen in einer Tragschiene angebracht. Da die Transportrollen nicht nur die Funktion als Rolle während des Transports besitzen, sondern gleichzeitig auch über die Lebensdauer des Haushaltsstandgeräts als Gerätefuß dienen, müssen diese Transportrollen sehr stabil ausgeführt werden. Solche Transportrollen sind in der Regel aus einem hochwertigen Kunststoffrad und einer stabilen Stahlachse aufgebaut. Diese Kombination von hochwertigen Materialien und die Tatsache, dass solche Transportrollen mehrstückig ausgeführt sind, verursachen entsprechend hohe Herstellungskosten.

Die Offenlegungsschrift GB 819 057 offenbart ein Haushaltsstandgerät gemäß dem Oberbegriff von Anspruch 1 und zeigt eine Wäscheschleuder umfassend ein Gehäuse, wobei an einer Unterseite des Gehäuses ein Rahmen vorgesehen ist, an welchem drei Standfüße sowie eine drehbar gelagerte Rolle angeordnet sind.

Die Offenlegungsschrift WO 01/97664 A1 zeigt einen Behälter, wobei an einer Unterseite des Behälters Transportrollen gebildet sind.

Die Offenlegungsschrift GB 208 360 zeigt eine Waschmaschine umfassend vier Standfüße, wobei an zwei Standfüßen jeweils eine drehbar gelagerte Rolle vorgesehen ist, wobei die Rolle zur Seite hin absteht.

Der vorliegenden Erfindung liegt somit die Aufgabe zugrunde, die Herstellungskosten für die Transportrollen zu reduzieren, ohne auf die Funktion eines einfachen Transports verzichten zu müssen und ohne die Langlebigkeit bzw. Standsicherheit des Haushaltsstandgeräts zu beeinträchtigen.

Diese Aufgabe wird mit einem Haushaltsstandgerät gemäß Anspruch 1 gelöst. Vorteilhafte Weiterbildungen der Erfindung sind Gegenstand der abhängigen Ansprüche.

Ein erfindungsgemäßes Haushaltsstandgerät umfasst an seiner Vorderseite mindestens einen nach unten ragenden vorderen Gerätefuß und an seiner Rückseite mindestens eine nach unten hervorstehende Transportrolle. Die Richtungsangabe "unten" bezieht sich hierbei auf die übliche Aufstellung des Haushaltsstandgeräts, bei der das Haushaltsstandgerät mit seinen an der Unterseite angeordneten Gerätefüßen bzw. Transportrollen auf dem Boden bzw. einer Abstellfläche aufliegt. Das erfindungsgemäße Haushaltsstandgerät zeichnet sich dadurch aus, dass zwischen der mindestens einen Transportrolle und dem mindestens einen vorderen Gerätefuß mindestens ein weiterer, hinterer Gerätefuß an der Hinterseite des Haushaltsstandgeräts vorgesehen ist, dessen freies Ende gegenüber der Transportrolle vorragt, so dass der hintere Gerätefuß weiter nach unten hervorragt als die Transportrolle. Der Ausdruck "weiter nach unten ragen" bedeutet hierbei, dass bei einer normalen Aufstellung des Haushaltsstandgeräts der mindestens eine vordere Gerätefuß und der mindestens eine hintere Gerätefuß auf der Abstellfläche aufliegen und das Gewicht des Geräts tragen, während die mindestens eine Transportrolle mit keinem oder nur einem geringen Teil der Last des Gewichts beaufschlagt ist. In der Regel befindet sich daher der unterste Punkt der Transportrolle oberhalb der Abstellfläche. Der genannte Ausdruck bezieht sich jedoch nicht darauf, wie weit die mindestens eine Transportrolle und der mindestens eine hintere Gerätefuß über die jeweilige "lokale" Unterkante des Haushaltsstandgeräts an den betreffenden Stellen hinaus nach unten ragt. Bei einer entsprechenden nicht-ebenen Profilierung der Unterseite kann es vorkommen, dass die mindestens eine Transportrolle - an der jeweiligen Stelle der Unterseite - mehr über die entsprechende Unterseite des Haushaltsstandgeräts hervorragt als der mindestens eine hintere Gerätefuß, das Haushaltsstandgerät aber trotzdem auf dem vorderen und dem hinteren Gerätefuß auf der Abstellfläche ruht.

Durch die vorstehend beschriebene Anordnung der mindestens einen Transportrolle und des mindestens einen hinteren Gerätefußes ist es möglich, das erfindungsgemäße Haushaltsstandgerät auf dem mindestens einen vorderen Gerätefuß und dem mindestens einen hinteren Gerätefuß abzustellen, während es durch ein Kippen bzw. Verschwenken nach hinten so weit, bis das Haushaltsstandgerät auf der mindestens einen Transportrolle ruht und sowohl der vordere als auch der hintere Gerätefuß die Abstellfläche nicht mehr berührt, in herkömmlicher Weise rollend transportiert werden kann. Da somit die Belastung auf der Transportrolle nur kurzzeitig während eines Transports wirkt, wohingegen das Haushaltsstandgerät während seiner üblichen Standzeit nicht auf der Transportrolle, sondern auf dem hinteren Gerätefuß ruht, reicht für die Herstellung der Transportrolle ein langfristig weniger stabiles und damit kostengünstigeres Material aus. Durch diese erfindungsgemäße Anordnung kann überdies sichergestellt werden, dass es bei der mindestens einen Transportrolle nicht zu einem Ermüdungsbruch kommt, da das Gewicht des Haushaltsstandgeräts nur kurzzeitig auf der Transportrolle ruht.

Es ist bevorzugt, mindestens zwei vordere Gerätefüße und/oder mindestens zwei hintere Gerätefüße und/oder mindestens zwei Transportrollen an dem Haushaltsstandgerät vorzusehen, um dessen Stabilität und Balance zu verbessern. Dabei werden die jeweiligen Gerätefüße bzw. Transportrollen zumindest in die Nähe der jeweiligen Seitenwände bzw. bevorzugt in diesen eingelassen angeordnet sein. Außerdem ist es zum Ausgleich von Niveauunebenheiten vorteilhaft, wenn zumindest ein oder sogar beide vorderen Gerätefüße höhenverstellbar ausgebildet sind.

Es ist bevorzugt, dass der mindestens eine hintere Gerätefuß in der hinteren Hälfte oder sogar noch besser im hinteren Drittel des Haushaltsstandgeräts angeordnet ist, wobei sich "hinten" auf den jeweiligen der Rückseite benachbarten Abschnitt bezieht. Es wird hierbei davon ausgegangen, dass in der üblichen Bezeichnungsweise die Vorderseite diejenige ist, an welcher z. B. eine Tür oder eine Öffnungsklappe des Haushaltsstandgeräts angeordnet ist und die üblicherweise einem Bediener frei zugänglich ist.

Die Herstellungskosten können niedrig gehalten werden, wenn der mindestens eine hintere Gerätefuß aus Kunststoff hergestellt ist.

Eine besonders einfache und kostengünstige Herstellung ist dann möglich, wenn die mindestens eine Transportrolle eine Lagerachse aufweist, die einstückig mit der Transportrolle ausgebildet ist. Da nicht zwei unterschiedliche Komponenten für das System aus Transportrolle und Lagerachse verwendet werden müssen, bietet sich somit ein Kostenvorteil. Dieser Kostenvorteil kann noch erhöht werden, wenn sowohl die Transportrolle als auch die Lagerachse aus Kunststoff hergestellt werden und somit kein Metall zur Herstellung dieser Teile erforderlich ist. Erfindungsgemäß sind jeweils ein hinterer Gerätefuß und eine Transportrolle in einem gemeinsamen zumindest weitgehend tragsteif ausgebildeten Tragelement, das als Rahmen ausgebildet ist, angeordnet. Der gemeinsame Rahmen in jeder Seitenwand kann vorzugsweise eine kastenähnliche Aufnahme zur Abstützung der Transportrolle aufweisen. Der gemeinsame Rahmen kann dabei zu einer zusätzlichen Versteifung des Haushaltsstandgeräts beitragen. Der gemeinsame Rahmen ist an einer Seitenwand des Haushaltsstandgeräts angeordnet und bildet zusammen mit dieser Seitenwand eine geschlossene Einheit. Da z. B. bei Haushaltskältegeräten oft eine Seitenausschäumung im Bereich der Seitenwände eingebracht wird, verhindert der die geschlossene Einheit bildende gemeinsame Rahmen, dass Schaummaterial in den Bereich der Transportrolle gelangen und deren Beweglichkeit beeinträchtigen könnte.

Die Herstellung kann vereinfacht werden, und die Herstellungskosten können weiter dadurch reduziert werden, dass der hintere Gerätefuß und der gemeinsame Rahmen einstückig aus Kunststoff hergestellt sind.

Es ist von Vorteil, für die Transportrolle, welche eine Lagerachse aufweist, in dem gemeinsamen Rahmen eine einstückig mit dem Rahmen ausgebildete Lagersitzanordnung für die Lagerachse vorzusehen. Da diese Teile in einem einzigen Stück hergestellt werden können, brauchen sie nicht gesondert zusammenmontiert zu werden, was sich günstig auf die Herstellkosten auswirkt.

Die mit einer Lagerachse versehene Transportrolle ist vorzugsweise in mindestens zwei Rollen unterteilt, welche auf der gleichen Lagerachse angeordnet sind, wobei zwischen den mindestens zwei Rollen so viel Platz vorhanden sein muss, dass die Lagerachse sowohl zwischen den mindestens zwei Rollen als auch axial außerhalb dieser mindestens zwei Rollen gelagert werden kann. Auf diese Weise kann die Zahl der Stellen, an denen sich die Lagerachse auf einem Lagersitz abstützen kann, erhöht und dadurch die auf einen jeweiligen Abschnitt einwirkende Belastung reduziert werden. Dies ermöglicht eine weitere Reduzierung der Bruchgefahr der Lagerachse bzw. der Transportrolle mit einer entsprechenden Verbesserung der Haltbarkeit.

Es ist von Vorteil, wenn für die eine Lagerachse aufweisende Transportrolle eine Lagersitzanordnung für die Lagerachse vorgesehen ist, welche an mindestens zwei oder noch besser an mindestens drei Stellen jeweils einen Lagersitz für die Lagerachse der Transportrolle bildet, der für eine einrastende Aufnahme der Lagerachse ausgelegt ist. Somit kann die Lagerachse der Transportrolle durch einfaches Einrasten bzw. Einclipsen in dem Lagersitz der Lagersitzanordnung befestigt werden und benötigt keine aufwendige, zeitintensive Montage. Dies wirkt sich ebenfalls günstig auf die Herstellkosten aus.

Wenn die Lagersitzanordnung von einem Gehäuse umgeben ist, bietet dies den Vorteil, dass die Gefahr reduziert wird, dass Verunreinigungen in die Lagersitzanordnung für die Lagerachse der Transportrolle gelangen können und somit die Rollfunktion der Transportrolle beeinträchtigen können. Bei einstückiger Ausgestaltung der Lagersitzanordnung des Gehäuses ergeben sich eine vereinfachte Herstellung sowie Kosteneinsparungen, da auf einen gesonderten Montageschritt dieser beiden Bestandteile verzichtet werden kann.

Als Kunststoffmaterial für die vorstehend erwähnten Kunststoffteile kann beispielsweise Polyoxymethylen (POM), Polyethylen (PE), Polyethylenterephthalat (PET) oder Polyurethan (PU) eingesetzt werden.

Weitere Vorteile, Merkmale und Besonderheiten der Erfindung ergeben sich aus der nachfolgenden ausführlichen Beschreibung einer vorteilhaften Ausführungsform der Erfindung. Es zeigen:
- Fig. 1: in schematischer Darstellung eine Seitenansicht eines erfindungsgemäßen Haushaltsstandgeräts in einer Ruhe- bzw. Benutzungsstellung;
- Fig. 2: in schematischer Darstellung eine Seitenansicht eines erfindungsgemäßen Haushaltsstandgeräts in Transportstellung:
- Fig. 3: in perspektivischer Darstellung einen hinteren Gerätefuß mit Transportrolle sowie gemeinsamem Rahmen an einer Seitenwand eines erfindungsgemäßen Haushaltsstandgeräts;
- Fig. 4: in perspektivischer Darstellung einen gemeinsamen Rahmen mit Lagersitzanordnung für die Lagerachse einer Transportrolle sowie einen hinteren Gerätefuß eines erfindungsgemäßen Haushaltsstandgeräts; und
- Fig. 5: eine Form der Ausgestaltung einer Transportrolle für ein erfindungsgemäßes Haushaltsstandgerät.

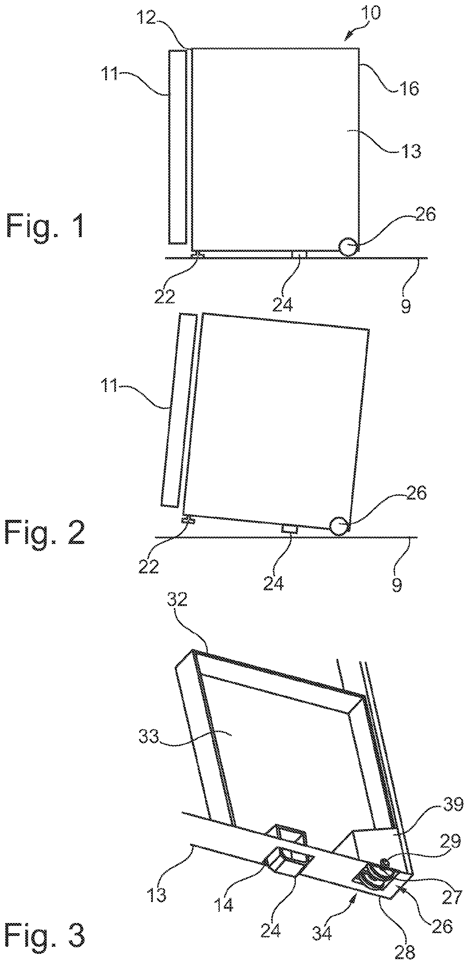

In Fig. 1 ist ein erfindungsgemäßes Haushaltsstandgerät 10 in Seitenansicht dargestellt. An einer Vorderseite 12 des Haushaltsstandgeräts 10 befindet sich links eine Tür 11, während sich rechts die Rückseite 16 des Haushaltsstandgeräts 10 befindet. Die Vorderseite 12 und die Rückseite 16 begrenzen eine dem Betrachter zugewandte Seitenwand 13. Im Bereich der Vorderseite 12 ist unten ein vorderer Gerätefuß 22 am Haushaltsstandgerät 10 angebracht, der nach unten ragt und auf einer Abstellfläche 9 aufliegt. Der vordere Gerätefuß 22 ist vorzugsweise in höhenverstellbarer Weise ausgebildet. An der Rückseite des Haushaltsstandgeräts 10 ist eine Transportrolle 26 angebracht, mittels der das Haushaltsstandgerät 10 gegebenenfalls rollend transportiert werden kann. Dadurch braucht das Haushaltsstandgerät 10 nicht mittels eines Gleitelements, wie es ansonsten vorzusehen wäre, transportiert zu werden. Zwischen der Transportrolle 26 und dem vorderen Gerätefuß 22 ist ein hinterer Gerätefuß 24 an der Unterseite des Haushaltsstandgeräts 10 angebracht, auf dem dieses auf der Abstellfläche 9 ruht. Obwohl dies in Fig. 1 nicht dargestellt ist, befinden sich in der Regel auf der anderen, vom Betrachter abgewandten Seite des Haushaltsstandgeräts 10 jeweils ein weiterer vorderer Gerätefuß 22, ein hinterer Gerätefuß 24 sowie eine Transportrolle 26.

Wie aus der Darstellung von Fig. 1 ersichtlich, berührt die Transportrolle 26 nicht die Abstellfläche 9. Das heißt in anderen Worten, dass das gesamte Gewicht des Haushaltsstandgeräts 10 auf dem vorderen Gerätefuß 22 und dem hinteren Gerätefuß 24 ruht. Somit befindet sich das Haushaltsstandgerät 10 gemäß Darstellung in Fig. 1 in einer Ruhestellung bzw. Benutzungsstellung.

Fig. 2 zeigt das Haushaltsstandgerät 10 von Fig. 1 dagegen in einer Transportstellung. In dieser Transportstellung ist das Haushaltsstandgerät 10 soweit nach hinten gekippt, dass nunmehr die Transportrolle 26 die Abstellfläche 9 berührt, während der vordere Gerätefuß 22 und der hintere Gerätefuß 24 die Abstellfläche nicht mehr berühren. In dieser Transportstellung kann das Haushaltsstandgerät 10 in einfacher, komfortabler Weise transportiert werden. Durch Zurückverschwenken bzw. Zurückkippen des Haushaltsstandgeräts 10 wird dieses wieder in eine Ruhestellung gebracht und ruht dann wieder auf dem vorderen Gerätefuß 22 und dem hinteren Gerätefuß 24, ohne dass eine Belastung auf die oberhalb der Abstellfläche 9 angeordnete Transportrolle 26 ausgeübt würde.

Wie in Fig. 1 ersichtlich ist, befindet sich der hintere Gerätefuß 24 in der hinteren, also von der Tür 11 abgewandten Seite des Haushaltsstandgeräts 10. Genauer gesagt befindet sich der hintere Gerätefuß 24 in etwa auf 2/3 der Wegstrecke von der Vorderseite 12 zur Rückseite 16 des Haushaltsstandgeräts 10, also auf 2/3 in Tiefenrichtung des Haushaltsstandgeräts 10.

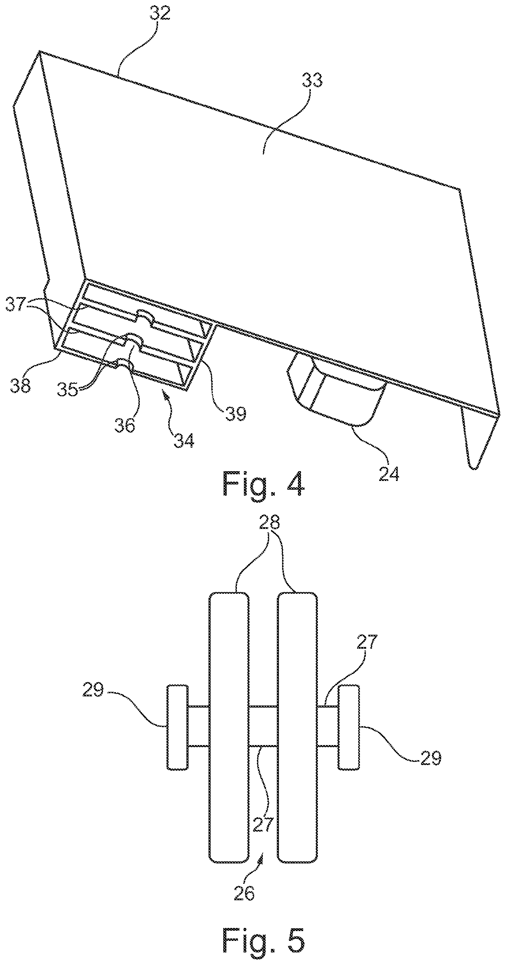

In Fig. 3 ist ein hinterer Gerätefuß 24 mit einer Transportrolle 26 dargestellt, die in einen gemeinsamen Rahmen 32 integriert sind. Der gemeinsame Rahmen 32 wiederum befindet sich in einer hinteren unteren Ecke der Seitenwand 13, die sich bei diesem Ausführungsbeispiel nicht nur in der Tiefenrichtung des Haushaltsstandgeräts 10 erstreckt, sondern als entsprechend abgewinkeltes Profil auch in dessen Breitenrichtung. An der Unterseite der Seitenwand 13 ist eine Aussparung 14 vorgesehen, welche von dem hinteren Gerätefuß 24 durchsetzt ist. Der hintere Gerätefuß 24 kann einstückig mit dem gemeinsamen Rahmen 32 ausgebildet oder z. B. durch Schweißen oder Schrauben mit diesem verbunden sein. Im rechten unteren Eck des gemeinsamen Rahmens 32 ist ein Gehäuse 39 gebildet, welches zusammen mit der vom Gehäuse 39 umschlossenen Lagersitzanordnung 34, welche in Fig. 4 genauer dargestellt ist, und dem Rahmen 32 einstückig ausgebildet ist. Der in die Seitenwand 13 eingepasste und mit ihr fest verbundene Rahmen 32 führt aufgrund seiner umlaufend geschlossenen Struktur einerseits zu einer Versteifung des Haushaltsstandgeräts in diesem Bereich. Diese versteifende Wirkung des Rahmens 32 wird noch verstärkt, da dieser eine Seitenwand 33, die wie eine Art Boden wirkt, aufweist. Das Vorhandensein des Rahmens 32 mit der Seitenwand 33 bietet außerdem den Vorteil, dass beim Ausschäumen des Bereichs der Seitenwand 13 des Haushaltsstandgeräts 10 kein Schaummaterial in das Innere des Rahmens 32 gelangen kann. Hierbei ist zu beachten, dass die Seitenwand 13 des Haushaltsstandgeräts den Rahmen 32 auf derjenigen Seite, die nicht durch die Seitenwand 33 bedeckt ist, abschließt.

Wie aus Fig. 3 ersichtlich ist, ist die Transportrolle 26 in der dargestellten Ausführungsform in zwei Rollen 28 unterteilt. Details dieser Ausgestaltung sind aus Fig. 5 besser ersichtlich.

In Fig. 4 ist der Rahmen 32 mit dem einstückig mit ihm ausgebildeten hinteren Gerätefuß 24 sowie mit der mit ihm einstückig ausgebildeten Lagersitzanordnung 34 und dem einstückig ausgebildeten Gehäuse 39 dargestellt. In dem Gehäuse 39 sind zwei in etwa parallele Rippen 37 vorgesehen, die sich ungefähr parallel zu einer von der Seitenwand 33 des Rahmens 32 abgewandten Außenwand 38 des Gehäuses 39 erstrecken. An den jeweils unteren Enden der Rippen 37 und der Außenwand 38 des Gehäuses 39 ist jeweils ein Lagersitz 35 in Form einer Aussparung vorgesehen. Die Aussparung ist dabei so ausgestaltet, dass sie im Längsschnitt entlang der Längenrichtung der Rippen 37 im Wesentlichen kreisförmig ist. "Im Wesentlichen kreisförmig" bedeutet hierbei, dass z. B. die jeweiligen Aussparungen etwas mehr als die Hälfte eines Kreises umfassen, so dass die jeweiligen Eintrittsöffnungen 36 für diese kreisförmigen Aussparungen bzw. Lagersitze 35 eine kleinere lichte Weite aufweisen als der Durchmesser des Kreises. Auf diese Weise kann eine Lagerachse 27 der Transportrolle 26 (vgl. Figur 5) in die drei Lagersitze 25 eingerastet bzw. eingeclipst werden. Dabei ist die eingeclipste Lagerachse 27 vorzugsweise formschlüssig in dem Lagersitz 35 aufgenommen. Selbstverständlich ist eine entsprechende Entfernung der Lagerachse 27 einer Transportrolle 26 aus den Lagersitzen 35 ebenfalls in einfacher Weise durch Ausrasten bzw. Ausclipsen möglich. Da die Lagersitze 35 an der Unterseite der Rippen 37 bzw. der Aussparung 38 des Gehäuses 39 angeordnet sind und von oben auf die Lagerachse 27 drücken, ist ein versehentliches Ausrasten bzw. Ausclipsen der Lagerachse 37 aus den Lagersitzen 35 nicht zu befürchten.

Fig. 5 zeigt in Seitenansicht eine Ausführungsform einer erfindungsgemäßen Transportrolle 26. Die Transportrolle 26 ist dabei in zwei Rollen 28 untergliedert, die durch die Lagerachse 27 verbunden ist. Die Lagerachse 27 ragt überdies auf beiden Außenseiten, also der voneinander abgewandten Seiten, der Rollen 28 über diese hervor, damit sie in die entsprechenden Lagersitze 35 eingerastet werden kann. An den beiden axialen Enden der Lagerachse 27 befindet sich jeweils eine Verdickung 29, um für eine zusätzliche axiale Fixierung der Lagerachse 27 in den Lagersitzen 35 zu sorgen.

Es ist festzuhalten, dass die unter Bezug auf die dargestellte und beschriebene Ausführungsform beschriebene Merkmale der Erfindung, wie beispielsweise die Ausgestaltung der Transportrolle, des hinteren und vorderen Gerätefußes sowie anderer Komponenten wie z. B. der zusätzliche Rahmen, auch bei alternativen Ausführungsformen oder Abwandlungen vorhanden sein können, außer wenn es anders angegeben ist oder sich aus technischen Gründen von selbst verbietet.

### BEZUGSZEICHENLISTE

- 9: Abstellfläche
- 10: Haushaltsstandgerät
- 11: Tür
- 12: Vorderseite
- 13: Seitenwand
- 14: Aussparung
- 16: Rückseite
- 22: vorderer Gerätefuß
- 24: hinterer Gerätefuß
- 26: Transportrolle
- 27: Lagerachse
- 28: Rolle
- 29: Verdickung
- 32: gemeinsamer Rahmen
- 33: Seitenwand
- 34: Lagersitzanordnung
- 35: Lagersitz
- 36: Eintrittsöffnung
- 37: Rippe
- 38: Außenwand
- 39: Gehäuse

## Patentansprüche

1. Haushaltsstandgerät (10), vorzugsweise Kühlschrank, Gefrierschrank, Geschirrspülmaschine, Waschmaschine oder Wäschetrockner, mit einer Vorderseite (12) und einer Rückseite (16), umfassend: mindestens einen im Bereich der Vorderseite (12) des Haushaltsstandgeräts (10) nach unten ragenden vorderen Gerätefuß (22), mindestens eine im Bereich der Rückseite (16) des Haushaltsstandgeräts (10) nach unten hervorstehende Transportrolle (26), wobei zwischen der mindestens einen Transportrolle (26) und dem mindestens einen vorderen Gerätefuß (22) mindestens ein hinterer Gerätefuß (24) angeordnet ist, dessen freies Ende gegenüber der Transportrolle (26) vorragt, und wobei jeweils ein hinterer Gerätefuß (24) und eine Transportrolle (26) in einem gemeinsamen Rahmen (32) angeordnet sind, **dadurch gekennzeichnet, dass** jede der beiden Seitenwände (13) des Haushaltsstandgeräts (10) den gemeinsamen Rahmen (32) aufweist und zusammen mit der Seitenwand (13) eine geschlossene Einheit ausbildet.

2. Haushaltsstandgerät (10) nach Anspruch 1, **dadurch gekennzeichnet, dass** mindestens zwei vordere Gerätefüße (22) und/oder mindestens zwei hintere Gerätefüße (24) und/oder mindestens zwei Transportrollen (26) vorgesehen sind.

3. Haushaltsstandgerät (10) nach Anspruch 1 oder 2, **dadurch gekennzeichnet, dass** der mindestens eine hintere Gerätefuß (24) in der der Rückseite (16) benachbarte Hälfte, vorzugsweise in dem der Rückseite (16) benachbarten Drittel, des Haushaltsstandgeräts (10) angeordnet ist.

4. Haushaltsstandgerät (10) nach einem der vorhergehenden Ansprüche, **dadurch gekennzeichnet, dass** der mindestens eine hintere Gerätefuß (24) aus Kunststoff hergestellt ist.

5. Haushaltsstandgerät (10) nach einem der vorhergehenden Ansprüche, **dadurch gekennzeichnet, dass** die mindestens eine Transportrolle (26) eine Lagerachse (27) aufweist, die einstückig mit der Transportrolle (26) ausgebildet ist.

6. Haushaltsstandgerät (10) nach Anspruch 5, **dadurch gekennzeichnet, dass** die Transportrolle (26) und die Lagerachse (27) aus Kunststoff hergestellt sind.

7. Haushaltsstandgerät (10) nach einem der vorhergehenden Ansprüche, **dadurch gekennzeichnet, dass** der gemeinsame Rahmen (32) eine kastenähnliche Aufnahme (39) besitzt, innerhalb der die Transportrolle (26) angeordnet ist.

8. Haushaltsstandgerät (10) nach einem der vorhergehenden Ansprüche , **dadurch gekennzeichnet, dass** der hintere Gerätefuß (24) und der gemeinsame Rahmen (32) einstückig aus Kunststoff hergestellt sind.

9. Haushaltsstandgerät (10) nach Anspruch 5 oder 6, **dadurch gekennzeichnet, dass** für die eine Lagerachse (27) aufweisende Transportrolle (26) in dem gemeinsamen Rahmen (32) eine einstückig mit dem Rahmen (32) verbundene Lagersitzanordnung (34) für die Lagerachse (27) vorgesehen ist.

10. Haushaltsstandgerät (10) nach Anspruch 5, 6 oder 9, **dadurch gekennzeichnet, dass** die eine Lagerachse (27) aufweisende Transportrolle (26) in mindestens zwei auf der gleichen Lagerachse (27) angeordnete Rollen (28) unterteilt ist, wobei die Lagerachse (27) sowohl zwischen den Rollen (28) als auch axial außerhalb der mindestens zwei Rollen (28) gelagert ist.

11. Haushaltsstandgerät (10) nach Anspruch 5, 6, 9 oder 10, **dadurch gekennzeichnet, dass** für die eine Lagerachse (27) aufweisende Transportrolle (26) eine Lagersitzanordnung (34) für die Lagerachse (27) vorgesehen ist, welche an mindestens zwei, vorzugsweise mindestens drei, Stellen jeweils einen Lagersitz (35) für die Lagerachse (27) der Transportrolle (26) bildet, wobei jeder Lagersitz (35) für eine einrastende Aufnahme der Lagerachse (27) ausgelegt ist.

12. Haushaltsstandgerät (10) nach einem der Ansprüche 9 bis 11, **dadurch gekennzeichnet, dass** das Haushaltsstandgerät ein Gehäuse (39) aufweist dass die Lagersitzanordnung (34) umgibt.

13. Haushaltsstandgerät (10) nach Anspruch 12, **dadurch gekennzeichnet, dass** die Lagersitzanordnung (34) und das Gehäuse (39) einstückig ausgebildet sind.

## Claims

1. Free-standing household appliance (10), preferably a refrigerator, freezer, dishwasher, washing machine or tumble dryer, having a front face (12) and a rear face (16), comprising:
at least one front appliance foot (22) that projects downward in the region of the front face (12) of the free-standing household appliance (10),
at least one transport roller (26) that projects downward in the region of the rear face (16) of the free-standing household appliance (10),
at least one rear appliance foot (24) being disposed between the at least one transport roller (26) and the at least one front appliance foot (22), the free end of said rear appliance foot (24) projecting out in relation to the transport roller (26), and
a rear appliance foot (24) and a transport roller (26) respectively being disposed in a common frame (32), **characterised in that** each of the two side walls (13) of the free-standing household appliance (10) has the common frame (32) and forms a closed unit together with the side wall (13).

2. Free-standing household appliance (10) according to claim 1, **characterised in that** at least two front appliance feet (22) and/or at least two rear appliance feet (24) and/or at least two transport rollers (26) are provided.

3. Free-standing household appliance (10) according to claim 1 or 2, **characterised in that** the at least one rear appliance foot (24) is disposed in the half adjacent to the rear face (16), preferably in the third adjacent to the rear face (16), of the free-standing household appliance (10).

4. Free-standing household appliance (10) according to one of the preceding claims, **characterised in that** the at least one rear appliance foot (24) is made of plastic.

5. Free-standing household appliance (10) according to one of the preceding claims, **characterised in that** the at least one transport roller (26) has a bearing axle (27) which is configured as a single piece with the transport roller (26).

6. Free-standing household appliance (10) according to claim 5, **characterised in that** the transport roller (26) and the bearing axle (27) are made of plastic.

7. Free-standing household appliance (10) according to one of the preceding claims, **characterised in that** the common frame (32) has a box-type recess (39), within which the transport roller (26) is disposed.

8. Free-standing household appliance (10) according to one of the preceding claims, **characterised in that** the rear appliance foot (24) and the common frame (32) are produced as a single piece from plastic.

9. Free-standing household appliance (10) according to claim 5 or 6, **characterised in that** for the transport roller (26) having a bearing axle (27) a bearing seat arrangement (34) connected as a single piece to the frame (32) is provided for the bearing axle (27) in the common frame (32).

10. Free-standing household appliance (10) according to claim 5, 6 or 9, **characterised in that** the transport roller (26) having a bearing axle (27) is divided into at least two rollers (28) disposed on the same bearing axle (27), the bearing axle (27) being supported both between the rollers (28) and also axially outside the at least two rollers (28).

11. Free-standing household appliance (10) according to claim 5, 6, 9 or 10, **characterised in that** for the transport roller (26) having a bearing axle (27) a bearing seat arrangement (34) for the bearing axle (27) is provided, which forms a bearing seat (35) for the bearing axle (27) of the transport roller (26) at at least two, preferably at least three, points in each instance, each bearing seat (35) being designed to receive the bearing axle (27) so that it is latched in.

12. Free-standing household appliance (10) according to one of claims 9 to 11, **characterised in that** the free-standing household appliance has a housing (39) which encloses the bearing seat arrangement (34).

13. Free-standing household appliance (10) according to claim 12, **characterised in that** the bearing seat arrangement (34) and the housing (39) are configured as a single piece.

## Revendications

1. Appareil ménager à poser (10), de préférence réfrigérateur, congélateur armoire, lave-vaisselle, lave-linge ou sèche-linge, avec un côté avant (12) et un côté arrière (16), comprenant : au moins un pied avant d'appareil (22) s'élevant vers le bas dans la zone du côté avant (12) de l'appareil ménager à poser (10), au moins au rouleau de transport (26) faisant saillie vers le bas dans la zone du côté arrière (16) de l'appareil ménager à poser (10), dans lequel au moins un pied arrière d'appareil (24), dont l'extrémité libre fait saillie par rapport au rouleau de transport (26), est disposé entre l'au moins un rouleau de transport (26) et l'au moins un pied avant d'appareil (22), et dans lequel un pied arrière d'appareil (24) et un rouleau de transport (26) sont respectivement disposés dans un cadre commun (32), **caractérisé en ce que** chacune des deux parois latérales (13) de l'appareil ménager à poser (10) présente le cadre commun (32) et constitue, avec la paroi latérale (13) une unité fermée.

2. Appareil ménager à poser (10) selon la revendication 1, **caractérisé en ce qu'**au moins deux pieds avant d'appareil (22) et/ou au moins deux pieds arrière d'appareil (24) et/ou au moins deux rouleaux de transport (26) sont prévus.

3. Appareil ménager à poser (10) selon la revendication 1 ou 2, **caractérisé en ce que** l'au moins un pied arrière d'appareil (24) est disposé dans la moitié voisine du côté arrière (16), de préférence dans le tiers voisin du côté arrière (16) de l'appareil ménager à poser (10).

4. Appareil ménager à poser (10) selon l'une des revendications précédentes,
**caractérisé en ce que** l'au moins un pied arrière d'appareil (24) est fabriqué en plastique.

5. Appareil ménager à poser (10) selon l'une des revendications précédentes,
**caractérisé en ce que** l'au moins un rouleau de transport (26) présente un axe de palier (27) exécuté en une seule pièce avec le rouleau de transport (26).

6. Appareil ménager à poser (10) selon la revendication 5, **caractérisé en ce que** le rouleau de transport (26) et l'axe de palier (27) sont fabriqués en plastique.

7. Appareil ménager à poser (10) selon l'une des revendications précédentes,
**caractérisé en ce que** le cadre commun (32) possède un logement semblable à un carter (39), au sein duquel le rouleau de transport (26) est disposé.

8. Appareil ménager à poser (10) selon l'une des revendications précédentes, **caractérisé en ce que** le pied arrière d'appareil (24) et le cadre commun (32) sont fabriqués en une seule pièce en plastique.

9. Appareil ménager à poser (10) selon la revendication 5 ou 6, **caractérisé en ce qu'**un dispositif de siège de palier (34) pour l'axe de palier (27) relié en une seule pièce avec le cadre (32) est prévu dans le cadre commun (32) pour le rouleau de transport (26) présentant un axe de palier (27).

10. Appareil ménager à poser (10) selon la revendication 5, 6 ou 9, **caractérisé en ce que** le rouleau de transport (26) présentant un axe de palier (27) est subdivisé en au moins deux rouleaux (28) disposés sur le même axe de palier (27), l'axe de palier (27) étant logé à la fois entre les rouleaux (28) et axialement en dehors des au moins deux rouleaux (28).

11. Appareil ménager à poser (10) selon la revendication 5, 6, 9 ou 10, **caractérisé en ce qu'**un dispositif de siège de palier (34) est prévu pour l'axe de palier (27) pour le rouleau de transport (26) présentant un axe de palier (27), lequel dispositif constitue en au moins deux, de préférence au moins trois, endroits respectivement un siège de palier (35) pour l'axe de palier (27) du rouleau de transport (26), chaque siège de palier (35) étant dimensionné pour un logement par encliquètement de l'axe de palier (27).

12. Appareil ménager à poser (10) selon l'une des revendications 9 à 11, **caractérisé en ce que** l'appareil ménager à poser présente une carcasse (39) qui entoure le dispositif de siège de palier (34).

13. Appareil ménager à poser (10) selon la revendication 12, **caractérisé en ce que** le dispositif de siège de palier (34) et la carcasse (39) sont exécutés en une seule pièce.
